# DEMANDE DE BREVET EUROPEEN

(11) **EP 4 568 212 A1**
(43) Date de publication de la demande: **11.06.2025**
(21) Numéro de dépôt: 24217229.4
(22) Date de dépôt: 03.12.2024
(51) Int. Cl.: H04L 41/084, H04L 41/085, H04L 41/022, H04L 41/082

(54) **PROCEDE ET DISPOSITIF DE GESTION D UNE MISE A JOUR D UN DISPOSITIF TERMINAL DANS UN RESEAU DE TELECOMMUNICATION.**

(30) Priorité: 07.12.2023 FR 2313772
(71) Demandeur: SAGEMCOM BROADBAND SAS, 92270 Bois-Colombes (FR)
(72) Inventeur: PAYEN, Olivier, 92270 Bois-Colombes (FR)
(74) Mandataire: Cabinet Le Guen Maillet

(57) **Abrégé**

Il est proposé ici un procédé de gestion d'une mise à jour d'un dispositif terminal communicant avec un dispositif contrôleur *via* un protocole de communication courant. Le procédé est implémenté par le dispositif terminal, et comporte :
- stocker en mémoire une première partie d'un autre protocole de communication, différent du protocole de communication courant,
- utiliser ladite première partie pour : émettre un message de sonde spécifique audit autre protocole de communication, se mettre en attente d'au moins un message de réponse, vérifier si au moins un dit message de réponse est reçu et télécharger une deuxième partie dudit autre protocole de communication de sorte à disposer d'une version complète dudit autre protocole de communication. Le procédé comporte en outre une phase de mise à jour du dispositif terminal avec ledit autre protocole de communication comme nouveau protocole de communication courant.

## Description

### DOMAINE TECHNIQUE

La présente divulgation concerne le domaine des réseaux de télécommunication, par exemple les réseaux de télécommunication sans-fil. En particulier, la présente divulgation concerne la gestion d'une mise à jour d'un protocole de communication d'un dispositif terminal appartenant à un réseau de communication local. Plus spécifiquement, la présente divulgation concerne la mise à jour de la pile protocolaire du dispositif terminal en fonction du protocole de communication actuellement utilisé par un dispositif contrôleur gérant le réseau de communication local.

### ETAT DE LA TECHNIQUE ANTERIEURE

Un réseau de télécommunication sans-fil (ci-après « réseau de communication ») conforme à l'une des normes IEEE 802.11 (par exemple l'un ou plusieurs des amendements b, g, a, n, ac, ax, be, etc., du standard IEEE 802.11) comprend typiquement une pluralité de noeuds. Chaque noeud est un dispositif électronique comprenant a minima un module radiofréquence permettant l'établissement de communications conformément à l'une des normes IEEE 802.11, ou dit autrement, conformément à l'une des normes Wi-Fi. Un tel réseau de communication est par exemple un réseau de communication local LAN (pour « *Local Area Network* » en anglais), par exemple un réseau domestique ou réseau professionnel.

Certains réseaux de communication locaux LAN comprennent, par exemple, des systèmes d'extension de couverture de communication sans-fil comportant typiquement un ou plusieurs dispositifs électroniques, communément appelés point d'accès (« *Access Point* » en anglais, ou « AP »), et une pluralité de dispositifs électroniques dits utilisateurs (ou clients) (ci-après « dispositifs utilisateurs ») pouvant établir des connexions sans fil avec l'un des points d'accès et/ou entre eux. Ces différents points d'accès sont interconnectés grâce à un sous-réseau d'acheminement ou d'amenée (« *backhaul subnetwork* » en anglais) et mettent tous à disposition des dispositifs utilisateurs un même réseau local sans-fil WLAN (« *Wireless Local Area Network* » en anglais). Ces points d'accès sont par exemple des répéteurs sans-fil (ou « *extenders* » en anglais). Les dispositifs utilisateurs sont typiquement des ordinateurs, télévisions, décodeurs TV, etc. On dit ainsi communément que les dispositifs utilisateurs sont associés « en Wi-Fi » avec les points d'accès. Par la suite, les points d'accès et les dispositifs utilisateurs sont nommés « dispositifs terminaux ».

Parmi les dispositifs électroniques, l'un peut être un dispositif dit « contrôleur » dans la mesure où les autres dispositifs terminaux du réseau de communication local LAN sont dépendants de son contrôle. Cela peut être le cas dans un réseau de communication sans-fil de type maillé (ou « *mesh* » en anglais), dans lequel l'un des points d'accès centralise certaines décisions de configuration des autres points d'accès. Dans un exemple, le dispositif contrôleur décide du protocole de communication utilisé pour les échanges entre les dispositifs terminaux entre eux ou avec une passerelle domestique, au sein du réseau de communication local LAN. Dans un exemple, dans un environnement résidentiel, ou professionnel, le dispositif contrôleur peut être intégré dans une « box » fournie par un opérateur Internet, c'est- à-dire la passerelle domestique (« *home gateway* », ou « *residential gateway* », en anglais), ou professionnelle.

La passerelle domestique, ou professionnelle, est connectée au réseau étendu, ou WAN (en anglais « *Wide Area Network* »), comme par exemple un réseau Internet, par liaison cuivre ADSL (en anglais « *Asymmetric Digital Subscriber Line* »), ou assimilée, par fibre et/ou par un accès mobile de type 3G/4G/5G, permettant aux dispositifs terminaux du réseau d'accéder au réseau étendu WAN et de communiquer entre eux.

Dans le réseau de communication local LAN, le protocole de communication (e.g., protocole de communication selon la norme EASY-MESH, etc.) utilisé par l'ensemble des différents dispositifs terminaux pour communiquer entre eux ou avec la passerelle domestique pour l'accès au réseau étendu WAN, est donc géré par le dispositif contrôleur. Ainsi, en général, le protocole de communication utilisé par les dispositifs terminaux à un instant t correspond à celui utilisé au même instant par le dispositif contrôleur. Par la suite il est considéré que le protocole de communication utilisé dans le réseau de communication local LAN correspond à celui utilisé par le dispositif contrôleur.

Lorsque le protocole de communication du dispositif contrôleur est mis à jour (i.e., mise à jour de sa pile protocolaire), alors les dispositifs terminaux communicant *via* l'ancienne version du protocole de communication du dispositif contrôleur, ne peuvent plus communiquer entre eux ou avec la passerelle pour l'accès au réseau étendu WAN, par exemple. Leur pile protocolaire doit alors être également mise à jour.

Afin de pouvoir s'adapter dynamiquement aux modifications du protocole de communication du dispositif contrôleur, les dispositifs terminaux peuvent comprendre plusieurs modules protocolaires ayant chacun leur propre protocole de communication. Pour découvrir, ou détecter, quel protocole de communication est utilisé par le dispositif contrôleur à l'instant t, les dispositifs terminaux peuvent activer de manière séquentielle chaque protocole de communication embarqué. Alternativement, les dispositifs terminaux peuvent activer de manière simultanée tous les protocoles de communication embarqués afin de détecter le protocole de communication actuellement utilisé par le dispositif contrôleur.

L'activation séquentielle ou simultanée de tous les protocoles de communication embarqués a pour inconvénient majeur une grande complexité de fonctionnement, en particulier pour l'activation simultanée. En outre, afin de supporter les multiples protocoles de communication, les dispositifs terminaux doivent comprendre suffisamment de ressources matérielles, notamment en ce qui concerne l'espace de stockage.

Cependant, certains dispositifs terminaux anciens ou à bas coût ne disposent pas nécessairement de ces ressources matérielles pour la cohabitation de plusieurs modules protocolaires, chacun abritant son propre protocole de communication. Ainsi, lorsque le protocole de communication en cours d'utilisation doit évoluer (par exemple suite à une mise à jour de la pile protocolaire du dispositif contrôleur ou lorsqu'un nouveau dispositif contrôleur plus récent est intégré au réseau de communication local LAN), il est souvent nécessaire d'intervenir manuellement sur ces dispositifs terminaux pour les mettre à jour. Cette tâche peut être particulièrement compliquée pour un utilisateur et provoquer une interruption prolongée du service offert par les dispositifs terminaux.

Il est alors souhaitable de pallier ces inconvénients de l'état de la technique.

### EXPOSE

Il est souhaitable de fournir une solution qui permette de simplifier la mise à jour de la pile protocolaire des dispositifs terminaux, lorsque le protocole de communication utilisé par le dispositif contrôleur gérant le réseau de communication local est différent de celui actuellement utilisé par le dispositif terminal.

A ces fins, il est proposé ici un procédé de gestion d'une mise à jour d'un dispositif terminal appartenant à un réseau de communication local géré par un dispositif contrôleur, le dispositif terminal communicant avec le dispositif contrôleur *via* un protocole de communication courant. Le procédé est implémenté par le dispositif terminal, et comporte :
- stocker en mémoire une première partie d'un autre protocole de communication, différent du protocole de communication courant,
- exécuter une phase de découverte au cours de laquelle le dispositif terminal utilise ladite première partie pour :
- émettre à destination du dispositif contrôleur au moins un message de sonde spécifique audit autre protocole de communication,
- se mettre en attente d'au moins un message de réponse répondant à l'au moins un message de sonde émis, en provenance du dispositif contrôleur,
- vérifier si au moins un dit message de réponse est reçu et, alors télécharger une deuxième partie dudit autre protocole de communication, complémentaire à ladite première partie, de sorte à disposer d'une version complète dudit autre protocole de communication,
- exécuter une phase de mise à jour du dispositif terminal comportant : remplacer, dans le dispositif terminal, le protocole de communication courant par ledit autre protocole de communication comme nouveau protocole de communication courant.

Ainsi, la présente divulgation propose une approche tout-à-fait nouvelle et inventive de la gestion de la mise à jour d'un dispositif terminal (e.g., répéteur sans-fil, décodeur, etc.).

Plus particulièrement, la présente divulgation propose de mettre à jour la pile protocolaire du dispositif terminal d'un réseau de communication local, grâce au stockage et à l'exécution d'une première partie spécifique d'un nouveau protocole de communication différent de celui actuellement utilisé par le dispositif contrôleur gérant le réseau de communication local.

L'utilisation de cette première partie spécifique du nouveau protocole de communication permet de détecter si ce nouveau protocole de communication est utilisé par le dispositif contrôleur gérant le réseau de communication local (par exemple suite à la mise à jour de la pile protocolaire de ce dispositif contrôleur).

La détection de l'utilisation par le dispositif contrôleur du nouveau protocole de communication se fait grâce à l'émission d'un message de sonde spécifique au nouveau protocole de communication et à la réception d'un message de réponse en retour Ainsi, lorsque le nouveau protocole de communication remplace le protocole de communication courant dans le réseau de communication local, alors une deuxième partie complémentaire à la première partie du nouveau protocole est téléchargée, pour obtenir la version complète de ce nouveau protocole de communication. Il est ainsi possible, pour le dispositif terminal, d'exécuter l'intégralité du nouveau protocole de communication.

Il est ainsi possible d'effectuer aisément la mise à jour de la pile protocolaire du dispositif terminal, sans intervention manuelle.

Par ailleurs, il est en outre possible d'optimiser un espace de stockage, tel qu'une mémoire du dispositif terminal, car il n'y a qu'une partie spécifique du nouveau protocole de communication qui est stocké en mémoire. Il est ainsi possible de stocker plusieurs protocoles de communication « partiels » (i.e., plusieurs parties spécifiques de plusieurs protocoles de communication), différents de celui actuellement utilisé par le dispositif contrôleur gérant le réseau de communication local.

Selon un mode de réalisation, la phase de mise à jour du dispositif terminal comporte en outre de supprimer du dispositif terminal le protocole de communication courant devenu obsolète.

Avantageusement, il est ainsi possible d'optimiser l'espace de stockage, ou mémoire, du dispositif terminal en ne stockant uniquement que le nouveau protocole de communication supporté par le réseau de communication local (i.e., protocole de communication utilisé par le dispositif contrôleur gérant le réseau de communication local). En particulier, il est possible de libérer de l'espace de stockage en supprimant le protocole de communication actuel devenu obsolète qui est alors remplacé par le nouveau protocole de communication.

Selon un mode de réalisation, le message de sonde est émis de manière répétée et la deuxième partie de l'autre protocole de communication, complémentaire à la première partie est téléchargée si, sur une période prédéfinie, un nombre de messages de réponse reçus est supérieur ou égal à un seuil de fiabilité prédéfini.

Avantageusement, la détection de l'utilisation par le dispositif contrôleur du nouveau protocole de communication se fait grâce à l'émission de manière répétée du message de sonde spécifique au nouveau protocole de communication et à la réception d'un nombre de messages de réponse fiables en retour. Un message de réponse est considéré comme fiable lorsque le nombre de messages de réponse est supérieur ou égal à un seuil de fiabilité prédéfini.

Selon un mode de réalisation, le message de sonde émis est émis selon une transmission de type diffusion.

Avantageusement, dans le cas où le réseau de communication local comprend plusieurs dispositifs contrôleurs, il est ainsi possible d'adresser tous ces dispositifs contrôleurs.

Selon un mode de réalisation, le message de sonde est émis selon une fréquence d'émission prédéfinie.

Il est ainsi possible de limiter la période d'interruption des services pour ne pas gêner les utilisateurs, tout en ne dégradant pas les performances réseau.

Selon un mode de réalisation, la fréquence d'émission prédéfinie est comprise entre 1s et 5min.

Selon un mode de réalisation, le procédé comporte en outre stocker en mémoire une liste d'une pluralité d'autres protocoles de communication, différents du protocole de communication courant, lesdits autres protocoles de communication étant classés selon un ordre du protocole de communication le plus récent au moins récent, et pour chaque autre protocole de communication de la liste, stocker en mémoire une première partie dudit autre protocole de communication en question, et dans lequel la phase de découverte, au cours de laquelle la première partie de chaque dit autre protocole de communication est utilisée, est effectuée selon l'ordre de ladite liste.

Avantageusement, lorsque plusieurs dispositifs contrôleurs sont connectés au réseau de communication local en même temps et utilisent différents protocoles de communications (i.e., l'un des protocoles de communication d'un dispositif contrôleur étant plus récent qu'un autre protocole de communication d'un autre dispositif contrôleur), il est possible de hiérarchiser, dans une liste, ces protocoles de communication selon un ordre du plus récent au moins récent. Le dispositif terminal est alors mis à jour selon le protocole de communication le plus récent se trouvant dans la liste et étant utilisé par un des dispositifs contrôleurs.

Il est aussi proposé ici, un procédé de mise à jour d'un système comportant un dispositif terminal et un dispositif contrôleur qui appartiennent à un réseau de communication local géré par le dispositif contrôleur. Le dispositif terminal communique avec le dispositif contrôleur *via* un protocole de communication courant, le procédé comportant :
- mettre à jour le dispositif terminal en téléchargeant une première partie d'un autre protocole de communication, différent du protocole de communication courant,
- déclencher une exécution du procédé de gestion de mise à jour tel que décrit précédemment, de sorte à déclencher la phase de découverte par le dispositif terminal ;
- mettre à jour le dispositif contrôleur en téléchargeant la version complète dudit autre protocole de communication, de sorte que le dispositif contrôleur réponde à des dits messages de sonde reçus du dispositif terminal pendant la phase de découverte par le dispositif terminal.

Il est aussi proposé ici, un dispositif terminal destiné à appartenir à un réseau de communication local géré par un dispositif contrôleur, le dispositif terminal étant configuré pour communiquer avec le dispositif contrôleur *via* un protocole de communication courant. Ce dispositif terminal comprend de la circuiterie électronique configurée pour :
- stocker en mémoire une première partie d'un autre protocole de communication, différent du protocole de communication courant,
- exécuter une phase de découverte au cours de laquelle le dispositif terminal utilise ladite première partie pour :
- émettre à destination du dispositif contrôleur au moins un message de sonde spécifique audit autre protocole de communication,
- se mettre en attente d'au moins un message de réponse répondant à l'au moins un message de sonde émis, en provenance du dispositif contrôleur,
- vérifier si au moins un dit message de réponse est reçu et alors télécharger une deuxième partie dudit autre protocole de communication, complémentaire à ladite première partie, de sorte à disposer d'une version complète dudit autre protocole de communication,
- exécuter une phase de mise à jour du dispositif terminal comportant : remplacer, dans le dispositif terminal, le protocole de communication courant par ledit autre protocole de communication comme nouveau protocole de communication courant.

Il est aussi proposé ici un produit programme d'ordinateur, comportant des instructions entraînant l'exécution, par un processeur, du procédé de gestion de mise à jour tel que décrit ci-dessus, lorsque lesdites instructions sont exécutées par le processeur.

Il est aussi proposé ici un support de stockage, stockant un programme d'ordinateur comportant des instructions entraînant l'exécution, par un processeur, du procédé de gestion de mise à jour tel que décrit ci-dessus, lorsque lesdites instructions sont lues et exécutées par le processeur.

### BREVE DESCRIPTION DES DESSINS

Les caractéristiques des modes de réalisation mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'environnement d'implémentation du procédé de gestion d'une mise à jour d'un dispositif terminal, selon un mode particulier de réalisation ;
[Fig. 2] illustre sous forme de diagramme un procédé de gestion d'une mise à jour d'un dispositif terminal selon un mode de réalisation ;
[Fig. 3A] illustre schématiquement un exemple des échanges entre un dispositif terminal et un dispositif contrôleur lors de l'exécution du procédé de gestion d'une mise à jour du dispositif terminal, selon un mode de réalisation,
[Fig. 3B] illustre schématiquement un autre exemple des échanges entre un dispositif terminal et un dispositif contrôleur lors de l'exécution du procédé de gestion d'une mise à jour du dispositif terminal, selon un mode de réalisation,
[Fig. 4] illustre schématiquement l'architecture matérielle d'un dispositif terminal configuré pour exécuter tout ou partie des étapes du procédé de gestion illustré dans les Figs. 2 et 3.

### EXPOSE DETAILLE DE MODES DE REALISATION

Le principe général de l'un ou l'autre des modes de réalisation concerne la mise à jour du protocole de communication d'un dispositif terminal (i.e., point d'accès ou dispositif utilisateur) suite à la mise en place d'un nouveau protocole de communication au sein du réseau de communication local LAN.

Le changement de protocole de communication au sein du réseau de communication local peut avoir pour origine :
- une mise à jour du protocole de communication (e.g., mise à jour de la pile protocolaire du dispositif contrôleur) actuellement utilisé par le dispositif contrôleur gérant le réseau de communication local LAN (par exemple : évolution vers un protocole de communication selon un standard plus récent, passage à une solution de gestion du réseau maillé d'un fournisseur différent),
- l'installation d'un nouveau dispositif contrôleur dans le réseau de communication local LAN. Ce nouveau dispositif contrôleur utilise un protocole de communication plus récent que celui actuellement utilisé dans le réseau de communication local (i.e., protocole de communication de l'ancien dispositif contrôleur).

En particulier, la présente divulgation concerne le stockage et l'utilisation d'une première partie spécifique de ce nouveau protocole de communication, préalablement à l'implémentation de ce nouveau protocole de communication dans sa version complète dans le dispositif terminal. L'utilisation de cette première partie spécifique du nouveau protocole de communication correspond à une fonction de découverte de ce dernier. Cette fonction de découverte permet, lors d'une phase de découverte, de détecter que ce nouveau protocole de communication est utilisé au sein du réseau de communication local LAN. Grâce à cette première partie du nouveau protocole de communication, le dispositif terminal peut, le cas échéant, télécharger une deuxième partie complémentaire de la première partie du nouveau protocole de communication pour une utilisation d'une version complète de ce dernier.

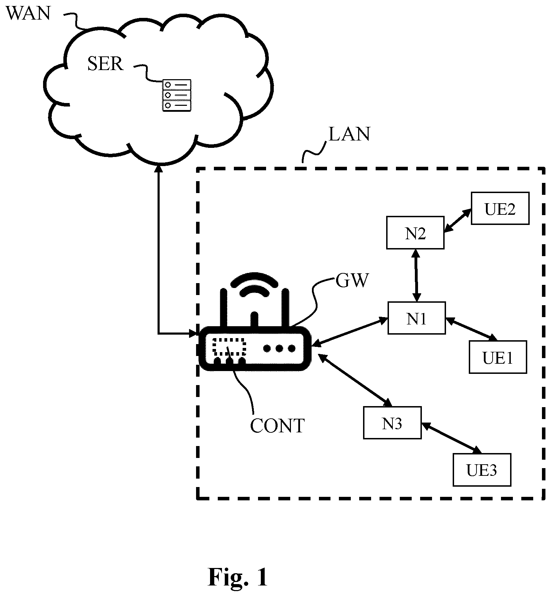

La **Fig. 1** illustre ainsi schématiquement un exemple d'environnement d'implémentation du procédé de gestion d'une mise à jour d'un dispositif terminal selon un mode particulier de réalisation.

Le réseau de communication local LAN comprend une passerelle, notée GW, d'accès à un réseau étendu WAN, par exemple un réseau Internet. La passerelle GW est connectée au réseau étendu WAN par une liaison ADSL ou fibre. Bien sûr, elle peut aussi se connecter à un réseau cellulaire d'un opérateur par une liaison sans fil radio de type 2G à 5G.

Dans le mode de réalisation en lien avec la Fig. 1, le réseau de communication local LAN est un réseau Wi-Fi de type maillé. Pour cela, ce réseau de communication local LAN comprend, par exemple, un système d'extension de couverture de communication sans-fil coordonnant plusieurs points d'accès (« *Access Point* » en anglais) intégrés à des noeuds de communication notés N1, N2 et N3. Ces différents points d'accès sont interconnectés grâce à un sous-réseau d'acheminement ou d'amenée (« *backhaul subnetwork* » en anglais). Ces points d'accès permettent tous l'accès au réseau de communication local LAN à des dispositifs utilisateurs notés UE1, UE2, UE3. Les points d'accès N1, N2 et N3 peuvent être connectés à la passerelle GW par liaison filaire ou par liaison sans fil pour l'accès au réseau étendu WAN.

En général, dans le cas d'un réseau sans-fil de type maillé, chaque noeud de communication N1, N2 et N3 du sous-réseau d'acheminement comprend une pluralité de points d'accès sur une même radio :
- une interface point d'accès dite « AP-BH » (pour « *Access Point Backhaul* » en anglais) correspondant à une interface point d'accès du sous-réseau d'acheminement,
- une interface point d'accès « STA-BH » (pour « *Station Backhaul* » en anglais) correspondant à une interface point d'accès utilisateur (ou client) du sous-réseau d'acheminement,
- une interface point d'accès « AP-FH » (pour « *Access Point Fronthaul* » en anglais) correspondant à une interface point d'accès du réseau de communication local LAN, cette interface étant dédiée à l'association des dispositifs utilisateurs UE1, UE2, UE3 au réseau de communication local LAN.

Les noeuds de communication N1, N2 et N3 du sous-réseau d'acheminement sont connectés les uns aux autres grâce à une structure en forme d'arbre, un noeud pouvant alors servir de relais entre deux autres noeuds du sous-réseau d'acheminement. Les noeuds de communication N1, N2 et N3 sont ainsi interconnectés grâce à des liaisons filaires, par exemple de type Ethernet, et/ou à des liaisons sans-fil. Les noeuds de communication N1, N2 et N3 du sous-réseau d'acheminement communiquent ainsi entre eux grâce à des liaisons logiques, par exemple des communications IP ou des tunnels chiffrés ou des communications selon un protocole de communication propriétaire. Dans un exemple, le noeud N1 est connecté au noeud N2 grâce à une liaison sans-fil entre l'interface radio point d'accès AP-BH du noeud N1 et l'interface radio client ST-BH du noeud N2. Les liaisons entre deux noeuds du sous-réseau d'acheminement sont appelées liaisons d'acheminement ou liaisons « backhaul » et peuvent être filaires ou sans fil.

Le cas échéant, les dispositifs utilisateurs UE1, UE2, UE3 peuvent se connecter aux différents noeuds N1 à N3 *via* leur interface radio AP-FH pour leur accès au réseau de communication local LAN.

Ce réseau de communication local LAN comprend donc également l'ensemble des dispositifs utilisateurs UE1, UE2, UE3 tels qu'un décodeur TV, un ordinateur personnel, une tablette, etc. Ces dispositifs utilisateurs UE1, UE2, UE3 peuvent être connectés directement à la passerelle GW ou *via* l'un des points d'accès situés dans les noeuds de communication N1, N2 ou N3 (comme représentés sur la Fig. 1). La connexion avec la passerelle GW ou les points d'accès situés dans les noeuds de communication N1, N2, N3 peut se faire par liaison filaire (par exemple de type Ethernet), ou par d'autres types de connexion comme par exemple USB, liaison sans fil (par exemple de type : Wi-Fi, Bluetooth, Bluetooth Low Energy, Zwave, Zigbee, DECT-ULE... etc.).

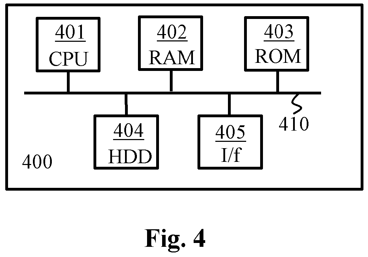

Par la suite, les dispositifs utilisateurs UE1, UE2, UE3 et les points d'accès situés dans les noeuds de communication N1, N2, N3 sont nommés dispositifs terminaux 400. Un exemple de réalisation d'un tel dispositif terminal 400 est représenté ci-après en lien avec la Fig. 4. Ces dispositifs terminaux 400 sont aptes à se connecter au réseau de communication local LAN en ce qu'ils disposent des autorisations et configurations nécessaires à accéder aux ressources dudit réseau de communication local LAN.

Le réseau de communication local LAN de la Fig. 1 comprend également un dispositif contrôleur CONT gérant ledit réseau. Dans le mode de réalisation selon la Fig. 1, le dispositif contrôleur CONT est situé dans la passerelle GW. Dans ce cas, la passerelle GW fournit non seulement l'accès au réseau étendu WAN, mais gère également le réseau de communication LAN *via* le dispositif contrôleur CONT.

Dans une variante, le dispositif contrôleur CONT est un dispositif électronique indépendant de la passerelle GW. Dans ce cas, le dispositif contrôleur CONT gère le réseau de communication local LAN et la passerelle GW fournit l'accès au réseau étendu aux dispositifs terminaux 400 et au dispositif contrôleur CONT. Il est à noter que les dispositifs terminaux 400 peuvent alternativement ou additionnellement, accéder au réseau étendu *via* d'autres équipements, tels que par exemple une clé USB fournissant un accès au réseau étendu (par exemple clé 4G).

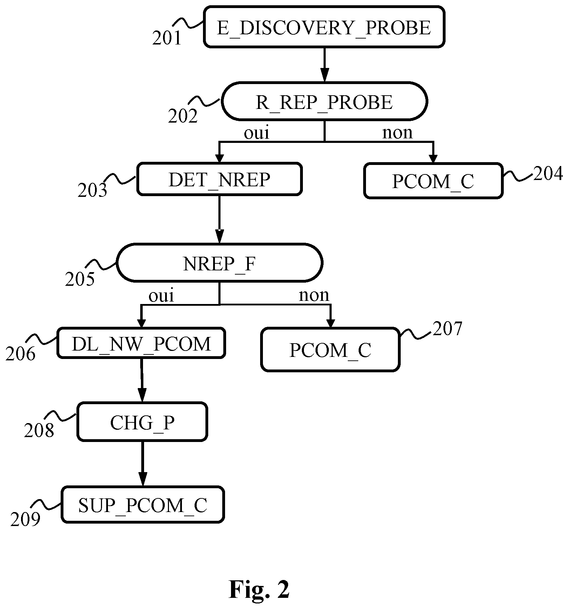

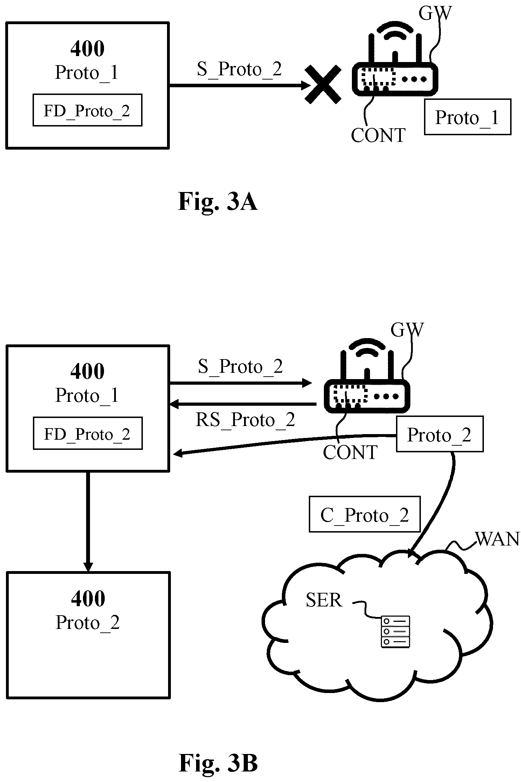

Tout ou partie du procédé de gestion d'une mise à jour d'un dispositif terminal 400 tel que décrit ci-après en lien avec les Fig. 2 et Fig. 3A et 3B est réalisé par un dispositif de terminal 400 décrit ci-après en lien avec la Fig. 4.

Afin d'illustrer l'implémentation du procédé de gestion de mise à jour d'un dispositif terminal 400, on considère que ledit dispositif terminal 400 est par exemple un point d'accès de type répéteur sans-fil.

La **Fig. 2** illustre sous forme de diagramme un procédé de gestion d'une mise à jour d'un dispositif terminal 400, selon un mode particulier de réalisation.

La **Fig. 3A** illustre schématiquement un exemple des échanges entre : un dispositif terminal 400, un dispositif contrôleur CONT situé dans la passerelle GW, lors de l'exécution du procédé de gestion selon un mode particulier de réalisation.

La **Fig. 3B** illustre schématiquement un autre exemple des échanges entre : un dispositif terminal 400, un dispositif contrôleur CONT situé dans la passerelle GW, lors de l'exécution du procédé de de gestion selon un mode particulier de réalisation.

Il est considéré ici que le dispositif contrôleur CONT utilise actuellement un premier protocole de communication, noté Proto_1 et impose donc l'utilisation de ce protocole de communication Proto _1 dans le réseau de communication local LAN. Le dispositif terminal 400 utilise donc ce premier protocole de communication Proto_1 afin de pouvoir pleinement communiquer dans le réseau de communication LAN et accéder au réseau étendu WAN, auquel cas *via* la passerelle GW.

Pour être en mesure de détecter un changement de protocole de communication dans le réseau de communication local LAN, le dispositif terminal 400 stocke en mémoire et implémente également une première partie spécifique FD_Proto_2 d'un deuxième protocole de communication Proto _2, différent du premier protocole de communication Proto_1. Il est à noter que ce deuxième protocole de communication Proto_2 peut être un protocole de communication plus récent que le premier protocole de communication Proto_1. Ainsi, par la suite, le deuxième protocole de communication Proto_2 est également nommé nouveau protocole de communication, et le premier protocole de communication Proto_1 est également nommé ancien protocole de communication ou protocole de communication courant.

L'implémentation de cette première partie spécifique FD_Proto_2 du deuxième protocole de communication Proto_2 se fait en plus de l'implémentation des fonctions natives du dispositif terminal 400. Autrement dit, l'exécution des différentes étapes du procédé de gestion de mise à jour tel que décrit ci-après, se fait en parallèle des fonctions natives du dispositif terminal 400.

Cette partie spécifique FD_Proto_2 de ce deuxième protocole de communication Proto_2 correspond à une fonction de découverte de ce deuxième protocole de communication Proto_2. Par la suite, il est nommé « fonction de découverte », la première partie spécifique du deuxième protocole de communication Proto _2, différent du premier protocole de communication Proto_1 actuellement utilisé par le dispositif contrôleur CONT gérant le réseau de communication local LAN. Cette fonction découverte permet de découvrir, ou détecter, l'utilisation, dans le réseau de communication local LAN, du protocole de communication correspondant. Dans le cas d'espèce, la fonction de découverte FD_Proto_2 permet de découvrir, ou détecter, l'utilisation du deuxième protocole de communication Proto_2 dans le réseau de communication local LAN. En particulier, cette fonction de découverte FD_Proto_2 comprend :
- un module configuré pour émettre un message de sonde S_Proto_2, interprétable par le dispositif contrôleur CONT utilisant le deuxième protocole de communication Proto_2 ;
- un module configuré pour interpréter un message de réponse RS_Proto_2 au message de sonde émis S_Proto_2 en provenance du dispositif contrôleur CONT (notamment lorsque celui-ci a évolué vers le deuxième protocole de communication Proto_2) ;
- un module configuré pour télécharger depuis un serveur SER dédié, *via* le réseau étendu WAN une deuxième partie complémentaire C_Proto_2 du deuxième protocole de communication Proto _2, afin qu'une version complète de ce dernier puisse être implémentée dans le dispositif terminal 400.

Cette fonction de découverte FD_Proto_2 est simple dans son fonctionnement en ce qu'elle ne comprend que les modules décrits ci-dessus. Cela permet d'optimiser l'espace de stockage du dispositif terminal 400. L'empreinte mémoire de la fonction découverte est donc plus faible que si le dispositif terminal 400 devait embarquer la totalité du deuxième protocole de communication Proto_2. Ainsi, dans un mode de réalisation, le dispositif terminal 400 peut stocker et implémenter plusieurs fonctions découvertes spécifiques à différents protocoles de communication plus récents que celui actuellement utilisé dans le réseau de communication local LAN.

Dans un exemple, un dispositif terminal 400 nativement compatible avec un protocole de communication propriétaire stocke en mémoire et implémente la fonction de découverte d'un protocole de communication propriétaire d'un autre fournisseur.

Il est à noter que cette fonction de découverte est particulière à un protocole de communication particulier. En d'autres termes, les spécificités du nouveau protocole de communication à découvrir (par exemple le protocole de communication Proto_2 dans l'exemple en lien avec les Figs. 3A et 3B) impactent le type de fonction découverte. Autrement dit, à chaque protocole de communication correspond une fonction découverte correspondante.

En conséquence, afin de découvrir un nouveau protocole de communication utilisé dans le réseau de communication local LAN (e.g. deuxième protocole de communication Proto _2), le dispositif terminal 400 doit embarquer la fonction découverte correspondante (e.g., la fonction découverte FD_Proto_2 du deuxième protocole de communication Proto _2), avant que le nouveau protocole de communication soit mis en en place dans le réseau de communication local LAN. En effet, en cas d'incompatibilité entre les protocoles de communication du dispositif terminal 400 et du dispositif contrôleur CONT, le dispositif terminal 400 ne peut plus accéder au réseau de communication local LAN, ni au réseau étendu WAN.

Dans le cas d'un dispositif terminal 400 déjà présent dans le réseau de communication local LAN, il est possible que ce dernier n'embarque pas nativement la fonction découverte du nouveau protocole de communication (par exemple par ce que ce nouveau protocole de communication peut ne pas exister au moment du déploiement de ce dispositif terminal 400.). Alors, dans ce cas, une mise à jour du dispositif terminal 400 est nécessaire afin qu'il embarque la fonction découverte du nouveau protocole de communication. En d'autres termes, préalablement à la mise en place du nouveau protocole de communication dans le réseau de communication local LAN (i.e., avant la mise à jour de la pile protocolaire du dispositif contrôleur CONT ou avant l'ajout d'un nouveau dispositif contrôleur CONT plus récent), une mise à jour logicielle du dispositif terminal 400 est effectuée pour qu'il embarque la fonction de découverte associée au nouveau protocole de communication. Cette mise à jour logicielle du dispositif terminal 400 permet d'anticiper la mise en place d'un nouveau protocole de communication dans le réseau de communication local LAN. L'anticipation de la mise à jour de la fonction découverte permet au dispositif terminal 400 de toujours pouvoir se connecter, même de manière restreinte, au réseau de communication local LAN afin de pouvoir accéder au réseau étendu WAN (par exemple *via* le dispositif contrôleur CONT fournissant un accès au réseau étendu WAN). Le dispositif terminal 400, grâce à cette fonction découverte (et notamment au module configuré pour télécharger) peut accéder à un serveur SER d'un fournisseur de service pour le téléchargement de la deuxième partie complémentaire du nouveau protocole de communication associé à la fonction découverte utilisée, pour une implémentation de la version complète de ce nouveau protocole de communication.

Une fois que le dispositif terminal 400 est mis à jour pour embarquer la fonction découverte FD_Proto_2, il peut exécuter les étapes décrites en lien avec les Figs 2 et 3A et 3B pour la découverte d'un nouveau protocole de communication Proto_2 utilisé dans le réseau de communication local LAN et la mise à jour de sa pile protocolaire le cas échéant.

Au cours d'une étape 201, un message de sonde S_Proto_2, spécifique au deuxième protocole de communication Proto _2, est émis par le dispositif terminal 400 à destination du dispositif de contrôle CONT. Plus particulièrement, le message de sonde S_Proto_2 est envoyé par le dispositif terminal 400 dans une trame caractéristique du mode de transmission du message de sonde S_Proto_2. Dans un mode de réalisation, le message de sonde S_Proto_2 est émis de manière répétée.

Dans un exemple de réalisation, lorsque le dispositif terminal 400 est connecté au réseau de communication local LAN *via* un lien Ethernet, alors ce message de sonde S_Proto_2 est encapsulé dans une trame du protocole Ethernet. Dans un autre exemple de réalisation, lorsque le dispositif terminal 400 est connecté au réseau de communication local LAN par Wi-Fi, alors le message de sonde _Proto_2 est encapsulé dans une trame du protocole 802.11/Wi-Fi.

Dans un exemple de réalisation, lorsque la fonction de découverte est spécifique d'un protocole de communication selon le standard EasyMesh, ce message de sonde S_Proto_2 est un message de type « *1905 AP-Autoconfiguration Search* » (par exemple conformément au paragraphe 6.1 de la spécification Wi-Fi Alliance, ou « WFA », EasyMesh R3).

Ce message de sonde S_Proto_2 est uniquement interprétable par le dispositif de contrôle CONT lorsque ce dernier utilise, au moment de la réception du message de sonde S_Proto_2, le deuxième protocole de communication Proto_2. Dans le cas contraire, si le dispositif de contrôle CONT utilise toujours le premier protocole Proto_1, alors le message de sonde S_Proto_2 ne pourra pas être interprété par le dispositif de contrôle CONT (Fig. 3A).

Dans un mode de réalisation, afin que ce message de sonde S_Proto_2 puisse être éventuellement détecté par le dispositif contrôleur CONT dans l'intégralité du réseau de communication LAN, le dispositif terminal 400 émet le message de sonde S_Proto_2 selon une transmission de type diffusion (« *broadcast* » en anglais). Il est ainsi possible, contrairement à une transmission de type « unicast », d'adresser l'ensemble des dispositifs (dispositifs terminaux et dispositifs contrôleurs) du réseau de communication local LAN et être sûr qu'un ou plusieurs dispositifs contrôleurs reçoivent ce message de sonde S_Proto_2.

Dans un exemple de réalisation, lorsque le dispositif terminal 400 est un répéteur sans-fil, cette émission est faite sur chacune de ses interfaces pouvant être connectées à des dispositifs contrôleurs du réseau de communication LAN. Dans ce cas, les interfaces pouvant être connectées sont généralement des interfaces Ethernet, l'interface radio AP BH ou l'interface radio STA-BH.

Dans un mode de réalisation, l'émission du message de sonde S_Proto_2 est exécutée au cours d'une période pendant laquelle le dispositif terminal 400 n'exécute pas de fonction native.

Dans un autre mode de réalisation, l'émission du message de sonde S_Proto_2 est exécutée de manière périodique, c'est-à-dire que le message de sonde S_Proto_2 est émis de manière répétée, selon une fréquence d'émission F prédéfinie. Il est ainsi possible de détecter (ou découvrir) l'utilisation du deuxième protocole de communication Proto_2 par le dispositif contrôleur CONT. En effet, lorsque le dispositif contrôleur CONT a évolué, vers un autre protocole de communication, alors le service de gestion du réseau de communication local LAN est interrompu car le dispositif terminal 400 (e.g., répéteur sans-fil) et le dispositif contrôleur CONT utilisent chacun des protocoles différents, autrement dit ils ne parlent plus la même langue. Ainsi, la fréquence d'émission F du message de sonde S_Proto_2 doit être soigneusement choisie pour que d'un côté l'interruption de service subie par l'utilisateur due à l'incompatibilité entre le premier protocole de communication Proto_1 couramment utilisé par le dispositif terminal 400 et le deuxième/nouveau protocole de communication Proto_2 utilisé par le dispositif contrôleur CONT, ne soit pas trop longue. D'un autre côté, la fréquence d'émission F du message de sonde S_Proto_2 ne doit pas être trop courte car un envoi du message de sonde S_Proto_2 avec une fréquence trop élevée pourrait perturber les autres fonctions natives du dispositif terminal 400, ainsi qu'induire une charge supplémentaire due aux émissions du message de sonde S_Proto_2 sur le réseau de communication LAN.

Ainsi, dans un mode de réalisation, la fréquence d'émission F du message de sonde S_Proto_2 n'excède pas 5 minutes pour rendre l'interruption de service acceptable par l'utilisateur et n'est pas inférieure à la seconde pour ne pas dégrader les performances du réseau de communication local LAN. Dans un mode de réalisation, le message de sonde S_Proto_2 est envoyé toutes les 5 minutes.

Au cours d'une étape 202, notée R_REP_PROBE, le dispositif terminal 400 se met en attente d'un message de réponse RS_Proto_2 suite à l'émission du message de sonde S_Proto_2.

Comme évoqué précédemment et présenté en lien avec la Fig. 3A, si le dispositif contrôleur CONT n'utilise pas encore le deuxième protocole de communication Proto_2 spécifique au message de sonde S_Proto_2, alors aucun message de réponse RS_Proto_2 n'est transmis (étape 202, résultat « non ») du dispositif contrôleur CONT au dispositif terminal 400. Dans ce cas, au cours de l'étape 204, notée PCOM_C, le dispositif terminal 400 et le dispositif contrôleur CONT continuent à utiliser le premier protocole de communication Proto_1 pour leurs échanges dans le réseau de communication local LAN.

Au contraire, comme présenté en lien avec la Fig. 3B, si le protocole de communication utilisé par le dispositif de contrôle CONT a évolué vers le deuxième protocole de communication Proto _2, alors ce dernier envoie au dispositif terminal 400 un message de réponse RS_Proto_2. En d'autres termes, lorsque le dispositif contrôleur CONT est mis à jour en téléchargeant la version complète du deuxième protocole de communication Proto_2, alors le dispositif contrôleur CONT peut interpréter le message de sonde S_Proto_2 émis par le dispositif terminal 400 et envoyer au dispositif terminal 400 un message de réponse RS_Proto_2 pendant la phase de découverte effectuée par le dispositif terminal 400.

Par exemple, lorsque le dispositif contrôleur CONT utilise un protocole de communication selon le standard EasyMesh, le message de réponse RS_Proto_2 envoyé par le dispositif contrôleur CONT est de type « *1905 AP-Autoconfiguration Response* ».

Dans ce cas, au cours de cette étape 202 R_REP_PROBE le dispositif terminal 400 vérifie s'il reçoit un message de réponse RS_Proto_2 en provenance du dispositif contrôleur CONT. Grâce à la fonction de découverte FD_Proto_2, le dispositif terminal 400 est apte à interpréter ce message de réponse RS_Proto_2.

Si le dispositif terminal 400 reçoit un message de réponse RS_Proto_2 (étape 202, résultat « oui »), suite à l'émission du message de sonde S_Proto_2, alors le deuxième protocole de communication Proto_2 est utilisé par le dispositif contrôleur CONT et est donc supporté par le réseau de communication Local LAN.

Au cours d'une étape 203, optionnelle, notée DET_NREP, le dispositif terminal 400 détermine, sur une période P prédéfinie, un nombre de messages de réponse RS_Proto_2 reçu suite à l'émission de messages de sonde S_Proto_2 successifs pendant la période P prédéfinie. Autrement dit, le dispositif terminal 400 détermine si pour chaque message de sonde S_Proto_2 il reçoit un message de réponse RS_Proto_2 en retour sur la période P prédéfinie. Le dispositif terminal 400 comptabilise ensuite le nombre de messages de réponse RS_Proto_2 reçus sur la période P prédéfinie.

Dans un mode de réalisation, la période P prédéfinie dépend de la fréquence d'émission F du message de sonde S_Proto_2. Dans un mode de réalisation, cette période P est comprise entre 5 secondes et 5 minutes.

A l'issue de l'étape 203 DET_NREP, le dispositif terminal 400 détermine si le nombre de messages de réponse RS_Proto_2 reçus pendant la période P prédéfinie est fiable. Plus particulièrement, au cours d'une étape 205, optionnelle, notée NREP_F, le dispositif terminal 400 détermine si le nombre de messages de réponse RS_Proto_2 est supérieur ou égal à un seuil S de fiabilité de message de réponse prédéfini. Il est ainsi possible de ne pas tenir compte des évolutions de protocole de communication intermittentes pouvant survenir lors de l'installation du nouveau dispositif contrôleur CONT dans le réseau de communication local LAN. Dans un exemple de réalisation, un message de réponse RS_Proto_2 est considéré comme fiable si le dispositif terminal 400 reçoit au moins 4 réponses sur 5 transmissions de messages de sonde S_Proto_2.

Ainsi, à l'issue de l'étape 205 NREP_F, optionnelle, si le nombre de message de réponse RS_Proto_2 reçus est supérieur ou égal au seuil S de fiabilité (étape 205, résultat « oui ») alors le dispositif terminal 400 considère que le deuxième protocole de communication Proto_2 est utilisé dans le réseau de communication local LAN (i.e., le dispositif contrôleur CONT utilise le deuxième protocole de communication Proto_2 correspondant à la fonction découverte utilisée FD_Proto_2). Au contraire (étape 205, résultat « non »), si le nombre de messages de réponse RS_Proto_2 reçus est insuffisant (i.e., en dessous du seuil de fiabilité S) alors le dispositif terminal 400 considère que le deuxième protocole de communication Proto_2 correspondant à la fonction découverte FD_Proto_2 n'est pas utilisé par le dispositif contrôleur CONT et la procédure de téléchargement décrite ci-après n'est pas enclenchée. Dans ce cas, au cours de l'étape 207, notée PCOM_C, le dispositif terminal 400 et le dispositif contrôleur CONT continuent à utiliser le premier protocole de communication Proto_1 pour leurs échanges dans le réseau de communication local LAN. Optionnellement, à l'issue de l'étape 207 PCOM_C, le dispositif terminal 400 entame un nouveau cycle de découverte ou détection du deuxième protocole de communication Proto_2 grâce à sa fonction découverte FD_Proto_2.

Ainsi, si le nombre de messages de réponse RS_Proto_2 reçus est supérieur ou égal au seuil S de fiabilité (étape 205, résultat « oui ») alors le dispositif terminal 400 exécute l'étape 206 DL_NW_PCOM, optionnelle. Au cours de cette étape 206, DL_NW_PCOM, le dispositif terminal 400 utilise la fonction de découverte FD_Proto_2 pour accéder au réseau étendu WAN pour télécharger la deuxième partie complémentaire C_Proto_2 du deuxième protocole de communication Proto_2 spécifique à la fonction découverte FD_Proto_2. Pour cela, le dispositif terminal 400 télécharge depuis un serveur SER dédié cette deuxième partie complémentaire C_Proto_2.

Dans un exemple de réalisation, la mise à jour du dispositif terminal 400 peut être effectuée par téléchargement selon un protocole de transmission de type HTTPS (« *Hyper Text Transfer Protocol Secure* » en anglais) à partir d'une adresse URL (pour « *Uniform Resource Locator* » en anglais, ou « localisateur uniforme de ressource ») pré-renseignée en mémoire du dispositif terminal 400. L'URL doit être différente de celle utilisée pour une mise à jour classique sans évolution de la pile protocolaire du dispositif terminal 400. Le dispositif terminal 400 change de sa propre initiative cette URL.

Dans un autre exemple de réalisation, la mise à jour du dispositif terminal 400 et, en particulier, le téléchargement de la partie complémentaire du nouveau protocole de communication, peut aussi être effectuée par le protocole TR-069. Le protocole TR-069 (« *Technical Report* » ou CWMP pour « *CPE WANManagement Protocol* ») est un protocole défini pour gérer la communication entre des équipements d'un réseau local de l'utilisateur et un serveur d'autoconfiguration distant accessible via un réseau étendu WAN. Dans ce cas, une adresse URL de téléchargement de version est fournie par un serveur SER, qui est par exemple un serveur de type ACS (pour « *Automatic Configuration Server* » en anglais). Le dispositif terminal (par exemple un répéteur sans-fil) ne peut donc pas différencier l'adresse URL pour une mise à jour classique de celle pour une évolution de protocole de communication (par exemple protocole de communication selon le standard EasyMesh). Le dispositif terminal 400 (e.g., répéteur sans-fil) va donc indiquer un changement de protocole par une notification TR-69 nommée « *inform value change* ». Le nom du nouveau protocole de communication détecté doit être présent dans un champ dit de « *data model* » (ou modèle de données) et lorsque la valeur de ce champ change alors le dispositif terminal 400 envoie la notification permettant d'informer le serveur ACS qu'une mise à jour est souhaitable.

A l'issue de la phase de découverte comprenant les étapes 201 à 207, le dispositif terminal 400 exécute une phase de mise à jour de son protocole de communication courant.

Au cours d'une étape 208, notée CHG_P, le dispositif terminal 400 effectue alors une phase de mise à jour de son protocole de communication ou pile protocolaire. En particulier, le dispositif terminal 400 remplace l'ancien protocole de communication (i.e., premier protocole de communication Proto_1) par le nouveau protocole de communication (i.e., deuxième protocole de communication Proto_2). Le dispositif terminal 400 peut alors utiliser pleinement le nouveau protocole de communication Proto_2 dans sa version complète.

Au cours d'une étape 209, notée SVP_PCOM_C, le dispositif terminal 400 supprime l'ancien protocole de communication (i.e., premier protocole de communication Proto_1) devenu obsolète. Il est ainsi possible d'optimiser l'espace de stockage en ne conservant que le protocole de communication, par exemple le plus récent, utilisé dans le réseau de communication local LAN.

Dans un mode de réalisation particulier, il peut arriver que plusieurs dispositifs contrôleurs soient présents dans le réseau de communication local. C'est le cas par exemple lorsqu'un nouveau dispositif contrôleur est ajouté au réseau de communication local LAN, en vue, par exemple de remplacer celui actuellement présent. Ces dispositifs contrôleurs implémentent alors des protocoles de communication différents. En particulier, un des dispositifs contrôleurs implémente un protocole de communication plus récent que l'autre dispositif contrôleur. Dans ce cas, le dispositif terminal 400 implémente plusieurs fonctions découvertes associées à ces différents protocoles de communication. Le dispositif terminal 400 détecte alors plusieurs protocoles de communication différents. La détermination du protocole de communication « dominant » consiste à sélectionner le protocole de communication le plus récent parmi l'ensemble de protocoles de communication utilisés par les différents dispositifs contrôleurs. Pour cela, le dispositif terminal 400 comporte en mémoire une liste des protocoles de communication classés du plus récent au moins récent avec pour chaque protocole de communication la fonction de découverte qui s'y rapporte. Le dispositif terminal 400 tente alors de découvrir chaque protocole de communication dans l'ordre de cette liste. Autrement dit, le dispositif terminal 400 exécute en premier la fonction de découverte du protocole de communication le plus récent. La procédure de téléchargement est alors enclenchée pour le protocole de communication le plus récent parmi l'ensemble de protocoles de communication utilisés par les dispositifs contrôleurs.

La **Fig. 4** illustre schématiquement l'architecture matérielle d'un dispositif terminal 400 configuré pour exécuter tout ou partie des étapes du procédé illustré dans les Figs. 2 et 3A et 3B.

Le dispositif terminal 400 comprend, reliés par un bus de communication 410 : un processeur ou CPU (« *Central Processing Unit* » en anglais) 401 ; une mémoire vive RAM (« *Random Access Memory* » en anglais) 402 ; une mémoire morte ROM (« *Read Only Memory* » en anglais) 403, par exemple une mémoire Flash ; un dispositif de stockage de données, tel qu'un disque dur HDD (« *Hard Disk Drive* » en anglais), ou un lecteur de support de stockage, tel qu'un lecteur de cartes SD (« *Secure Digital* » en anglais) 404 ; au moins une interface de communication Pf 405 permettant au dispositif terminal 400 d'interagir avec les autres dispositifs terminaux du réseau de communication local LAN, ainsi qu'avec le dispositif contrôleur CONT.

Le processeur 401 est capable d'exécuter des instructions chargées dans la RAM 402 à partir de la ROM 403, d'une mémoire externe (non représentée), du dispositif de stockage de données 404, tel qu'une carte SD, ou d'un réseau de communication (non représenté). Lorsque le dispositif terminal 400 est mis sous tension, le processeur 401 est capable de lire de la RAM 402 des instructions et de les exécuter. Ces instructions forment un programme d'ordinateur causant la mise en oeuvre, par le processeur 401, des comportements, étapes et algorithmes décrits ici, en particulier en combinaison avec tout ou partie des étapes des Figs. 2 et 3A et 3B.

Tout ou partie des comportements, étapes et algorithme décrits ici peut ainsi être implémenté sous forme logicielle par exécution d'un ensemble d'instructions par une machine programmable, telle qu'un DSP (« *Digital Signal Processor* » en anglais) ou un microcontrôleur, ou être implémenté sous forme matérielle par une machine ou un composant (« *chip* » en anglais) dédié ou un ensemble de composants (« *chipset* » en anglais) dédié, tel qu'un FPGA (« *Field Programmable Gate Array* » en anglais) ou un ASIC (« *Application-Specific Integrated Circuit* » en anglais). D'une manière générale, le dispositif terminal 400 comprend de la circuiterie électronique agencée et configurée pour implémenter les comportements, étapes et algorithmes décrits ici.

Il est à noter en outre que le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

## Revendications

1. Procédé de gestion d'une mise à jour d'un dispositif terminal (400, N1, N2, N3, UE1, UE2, UE3) appartenant à un réseau de communication local (LAN) géré par un dispositif contrôleur (CONT), le dispositif terminal (400, N1, N2, N3,UE1, UE2, UE3) communicant avec le dispositif contrôleur (CONT) *via* un protocole de communication courant, le procédé étant implémenté par le dispositif terminal (400, N1, N2, N3,UE1, UE2, UE3), et comportant :
- stocker en mémoire une première partie d'un autre protocole de communication, différent du protocole de communication courant,
- exécuter une phase de découverte au cours de laquelle le dispositif terminal (400, N1, N2, N3,UE1, UE2, UE3) utilise ladite première partie pour :
- émettre à destination du dispositif contrôleur (CONT) au moins un message de sonde spécifique audit autre protocole de communication,
- se mettre en attente d'au moins un message de réponse répondant à l'au moins un message de sonde émis, en provenance du dispositif contrôleur (CONT),
- vérifier si au moins un dit message de réponse est reçu et, alors télécharger une deuxième partie dudit autre protocole de communication, complémentaire à ladite première partie, de sorte à disposer d'une version complète dudit autre protocole de communication,
- exécuter une phase de mise à jour du dispositif terminal (400, N1, N2, N3, UE1, UE2, UE3) comportant : remplacer, dans le dispositif terminal (400, N1, N2, N3, UE1, UE2, UE3), le protocole de communication courant par ledit autre protocole de communication comme nouveau protocole de communication courant.

2. Procédé selon la revendication 1, dans lequel la phase de mise à jour du dispositif terminal comporte en outre de supprimer du dispositif terminal (400, N1, N2, N3, UE1, UE2, UE3) le protocole de communication courant devenu obsolète.

3. Procédé selon l'une des revendications 1 et 2, dans lequel le message de sonde est émis de manière répétée et la deuxième partie dudit autre protocole de communication, complémentaire à ladite première partie est téléchargée si, sur une période (P) prédéfinie, un nombre de messages de réponse reçus est supérieur ou égal à un seuil (S) de fiabilité prédéfinie.

4. Procédé selon l'une quelconque des revendications 1 à 3, dans lequel le message de sonde émis est émis selon une transmission de type diffusion.

5. Procédé selon l'une quelconque des revendications 1 à 4, dans lequel le message de sonde est émis selon une fréquence d'émission (F) prédéfinie.

6. Procédé selon la revendication 5, dans lequel la fréquence d'émission (F) prédéfinie est comprise entre 1s et 5min.

7. Procédé selon l'une quelconque des revendications 1 à 6, comportant en outre stocker en mémoire une liste d'une pluralité d'autres protocoles de communication, différents du protocole de communication courant, lesdits autres protocoles de communication étant classés selon un ordre du protocole de communication le plus récent au moins récent, et pour chaque autre protocole de communication de la liste, stocker en mémoire une première partie dudit autre protocole de communication en question, et dans lequel la phase de découverte, au cours de laquelle la première partie de chaque dit autre protocole de communication est utilisée, est effectuée selon l'ordre de ladite liste.

8. Procédé de mise à jour d'un système comportant un dispositif terminal (400, N1, N2, N3, UE1, UE2, UE3) et un dispositif contrôleur (CONT) qui appartiennent à un réseau de communication local (LAN) géré par le dispositif contrôleur (CONT), le dispositif terminal (400, N1, N2, N3,UE1, UE2, UE3) communicant avec le dispositif contrôleur (CONT) *via* un protocole de communication courant, le procédé comportant :
- mettre à jour le dispositif terminal (400, N1, N2, N3, UE1, UE2, UE3) en téléchargeant une première partie d'un autre protocole de communication, différent du protocole de communication courant,
- déclencher une exécution du procédé selon l'une quelconque des revendications 1 à 7, de sorte à déclencher la phase de découverte par le dispositif terminal (400, N1, N2, N3, UE1, UE2, UE3) ;
- mettre à jour le dispositif contrôleur (CONT) en téléchargeant la version complète dudit autre protocole de communication, de sorte que le dispositif contrôleur (CONT) réponde à des dits messages de sonde reçus du dispositif terminal (400, N1, N2, N3, UE1, UE2, UE3) pendant la phase de découverte par le dispositif terminal (400, N1, N2, N3, UE1, UE2, UE3).

9. Dispositif terminal (400, N1, N2, N3, UE1, UE2, UE3) destiné à appartenir à un réseau de communication local (LAN) géré par un dispositif contrôleur (CONT), le dispositif terminal (400, N1, N2, N3,UE1, UE2, UE3) étant configuré pour communiquer avec le dispositif contrôleur (CONT) *via* un protocole de communication courant, ledit dispositif terminal comprenant de la circuiterie électronique configurée pour :
- stocker en mémoire une première partie d'un autre protocole de communication, différent du protocole de communication courant,
- exécuter une phase de découverte au cours de laquelle le dispositif terminal (400, N1, N2, N3,UE1, UE2, UE3) utilise ladite première partie pour :
- émettre à destination du dispositif contrôleur (CONT) au moins un message de sonde spécifique audit autre protocole de communication,
- se mettre en attente d'au moins un message de réponse répondant à l'au moins un message de sonde émis, en provenance du dispositif contrôleur (CONT),
- vérifier si au moins un dit message de réponse est reçu et alors télécharger une deuxième partie dudit autre protocole de communication, complémentaire à ladite première partie, de sorte à disposer d'une version complète dudit autre protocole de communication,
- exécuter une phase de mise à jour du dispositif terminal (400, N1, N2, N3, UE1, UE2, UE3) comportant : remplacer, dans le dispositif terminal (400, N1, N2, N3, UE1, UE2, UE3), le protocole de communication courant par ledit autre protocole de communication comme nouveau protocole de communication courant.

10. Produit programme d'ordinateur, comportant des instructions entraînant l'exécution, par un processeur, du procédé selon l'une quelconque des revendications 1 à 6, lorsque lesdites instructions sont exécutées par le processeur.

11. Support de stockage, stockant un programme d'ordinateur comportant des instructions entraînant l'exécution, par un processeur, du procédé selon l'une quelconque des revendications 1 à 6, lorsque lesdites instructions sont lues et exécutées par le processeur.
